# EUROPEAN PATENT APPLICATION

(11) **EP 2 995 789 A1**
(43) Date of publication of application: **16.03.2016**
(21) Application number: 15178676.1
(22) Date of filing: 28.07.2015
(51) Int. Cl.: F01N 3/20, F01N 13/14, F01N 13/18, F01N 3/00

(54) **CATALYTIC CONVERTER APPARATUS**

(30) Priority: 02.09.2014 JP 2014177982
(71) Applicant: Toyota Jidosha Kabushiki Kaisha, Toyota-shi, Aichi-ken 471-8571 (JP); IBIDEN CO., LTD., Ogaki-shi, Gifu-ken 503-8604 (JP)
(72) Inventor: OGIMURA, Shoji, TOYOTA-SHI, AICHI-KEN, 471-8571 (JP); KOMITSU, Hideyuki, TOYOTA-SHI, AICHI-KEN, 471-8571 (JP); MUTSUDA, Fumiyuki, OGAKI-SHI, GIFU-KEN, 503-8604 (JP); NAKAMURA, Tomoyoshi, OGAKI-SHI, GIFU-KEN, 503-8604 (JP)
(74) Representative: Intès, Didier Gérard André

(57) **Abstract**

A catalytic converter apparatus (12) includes a catalyst substrate (14) that supports a catalyst for cleaning exhaust gas exhausted from an internal combustion engine, the catalyst substrate being heated by electrification; a case (28) formed in a tubular shape, the catalyst substrate being accommodated inside the case (28) and the case being attached to an exhaust pipe (10); an outer pipe (10, 22) provided at the case, the outer pipe being disposed at least at an upstream side of an exhaust gas flow direction relative to the catalyst substrate (14); an inner pipe (32) provided at the case inside the outer pipe (20, 22), an axial direction end portion of the inner pipe being formed in a tapered shape and a distal end face of the axial direction end portion being formed in a curved surface shape; and an insulating layer (26) provided at least at an inner side face and the axial direction end portion of the inner pipe.

## Description

### BACKGROUND

### Technical Field

The present invention relates to a catalytic converter apparatus that is provided at an exhaust pipe of an internal combustion engine.

### Related Art

Japanese Patent Application Laid-Open (JP-A) No. 2013-185573 discloses an electrically heated catalytic structure in which an inner pipe, in a shape that tapers to the upstream side of an exhaust gas flow direction, is provided at an outer pipe that accommodates a heat generating body (a catalyst substrate). In this electrically heated catalytic structure, an insulating layer is provided at the surface of the inner pipe.

In the electrically heated catalytic structure described above, the insulating layer may be formed by, for example, a material of the insulating layer being coated onto the surface of the inner pipe and fired. However, because the insulating layer at the surface of the inner pipe contracts in the firing process, cracks may form in the insulating layer at a distal end portion of the inner pipe. To describe this in more detail, an upstream side end portion of the inner pipe in a simply cut state has sharp corners, and it is likely that cracks form in the insulating layer starting from these corners.

### SUMMARY

In consideration of the situation described above, the present invention provides a catalytic converter apparatus that may suppress the formation of cracks in an insulating layer at an axial direction end portion of an inner pipe.

A catalytic converter apparatus according to a first aspect of the present invention includes: a catalyst substrate that supports a catalyst for cleaning exhaust gas exhausted from an internal combustion engine, the catalyst substrate being heated by electrification; a case formed in a tubular shape, the catalyst substrate being accommodated inside the case and the case being attached to an exhaust pipe; an outer pipe provided at the case, the outer pipe being disposed at least at an upstream side of an exhaust gas flow direction relative to the catalyst substrate; an inner pipe provided at the case inside the outer pipe, an axial direction end portion of the inner pipe being formed in a tapered shape and a distal end face of the axial direction end portion being formed in a curved surface shape; and an insulating layer provided at least at an inner side face and the axial direction end portion of the inner pipe.

According to the first aspect of the present invention, the catalyst substrate is accommodated inside the tubular case that is attached to the exhaust pipe, and the catalyst substrate inside the case is heated by electrification. As a result, exhaust gas exhausted from the internal combustion engine is cleaned. The outer pipe and the inner pipe are provided in the case. The outer pipe is disposed at least at the upstream side of the exhaust gas flow direction relative to the catalyst substrate. The axial direction end portion of the inner pipe is formed in the tapered shape at the inside of the outer pipe. The distal end face of the axial direction end portion of the inner pipe is formed in the curved surface shape. Because the insulating layer is provided at least at the inner side face and the axial direction end portion of the inner pipe, insulation between the catalyst substrate and the inner pipe may be maintained. In this structure, the distal end face of the axial direction end portion of the inner pipe is formed in the curved surface shape. Thus, sharp corners at the distal end face of the inner pipe are removed. Therefore, the formation of cracks in the insulating layer at the distal end face of the inner pipe may be suppressed. More specifically, the insulating layer is formed by, for example, a material of the insulating layer being coated onto at least the inner side face and axial direction end portion of the inner pipe and fired. At this time, because sharp corners at the distal end face of the inner pipe are removed, cracking of the insulating layer starting from sharp corners due to contraction of the insulating layer during firing may not occur, as a result of which the formation of cracks in the insulating layer at the distal end face of the inner pipe may be suppressed.

In a catalytic converter apparatus according to a second aspect of the present invention, in the first aspect, if a radius of curvature of the distal end face of the axial direction end portion is represented by R, chamfer machining is applied such that R≥0.5mm.

According to the second aspect of the present invention, if the radius of curvature of the distal end face of the axial direction end portion of the inner pipe is represented by R, chamfering machining is applied such that R≥0.5mm. Thus, the distal end face of the axial direction end portion of the inner pipe is formed to a smoother curved surface shape. Hence, the formation of cracks in the insulating layer at the distal end face of the axial direction end portion of the inner pipe may be more reliably suppressed.

In a catalytic converter apparatus according to a third aspect of the present invention, in the first aspect or the second aspect, a thickness of the insulating layer is set to at least 100 µm and at most 200 µm.

According to the third aspect of the present invention, the thickness of the insulating layer is specified to be at least 100 µm and at most 200 µm. Thus, because the thickness of the insulating layer is suitably specified, the formation of cracks in the insulating layer at the distal end face of the axial direction end portion of the inner pipe may be suppressed. For example, if the thickness of the insulating layer is thinner than 100 µm, cracking of the insulating layer may be caused by contraction of the insulating layer during firing, and if the thickness of the insulating layer is more than 200 µm, it is difficult to form the insulating layer with a more uniform thickness.

In a catalytic converter apparatus according to a fourth aspect of the present invention, in any one of the first to third aspects, the axial direction end portion is an upstream end portion that is arranged toward the upstream side of the exhaust gas flow direction.

According to the fourth aspect of the present invention, the axial direction end portion of the inner pipe is the upstream end portion that is arranged toward the upstream side of the exhaust gas flow direction. Thus, the formation of cracks in the insulating layer that is provided at the upstream end portion of the inner pipe may be suppressed.

### BRIEF DESCRIPTION OF THE DRAWINGS

Exemplary Embodiments of the present invention will be described in detail based on the following figures, wherein:
Fig. 1 is a sectional diagram showing an exhaust gas flow direction upstream side of a catalytic converter apparatus in accordance with a first exemplary embodiment of the present invention.
Fig. 2 is a magnified sectional diagram showing an upstream end portion of an upstream side decreasing diameter portion employed in the catalytic converter apparatus shown in Fig. 1.
Fig. 3 is a magnified sectional diagram, corresponding to Fig. 2, showing an upstream end portion of an upstream side decreasing diameter portion employed in a catalytic converter apparatus in accordance with a second exemplary embodiment of the present invention.
Fig. 4 is a magnified sectional diagram, corresponding to Fig. 2, showing an upstream end portion of an upstream side decreasing diameter portion employed in a catalytic converter apparatus in accordance with a third exemplary embodiment of the present invention.
Fig. 5A is a magnified sectional diagram illustrating a fabrication process of the upstream end portion of the upstream side decreasing diameter portion shown in Fig. 4.
Fig. 5B is a magnified sectional diagram illustrating the fabrication process of the upstream end portion of the upstream side decreasing diameter portion shown in Fig. 4.
Fig. 5C is a magnified sectional diagram illustrating the fabrication process of the upstream end portion of the upstream side decreasing diameter portion shown in Fig. 4.
Fig. 6 is a chart comparing the presence/absence of chipping of a glass coating layer at an upstream end portion of an upstream side decreasing diameter portion of a first example and an upstream end portion of an upstream side decreasing diameter portion of a third comparative example.
Fig. 7 is a graph showing maximum tensile stresses produced during cooling of an upstream end portion of an upstream side decreasing diameter portion of a second example and upstream end portions of upstream side decreasing diameter portions of first to third comparative examples.

### DETAILED DESCRIPTION

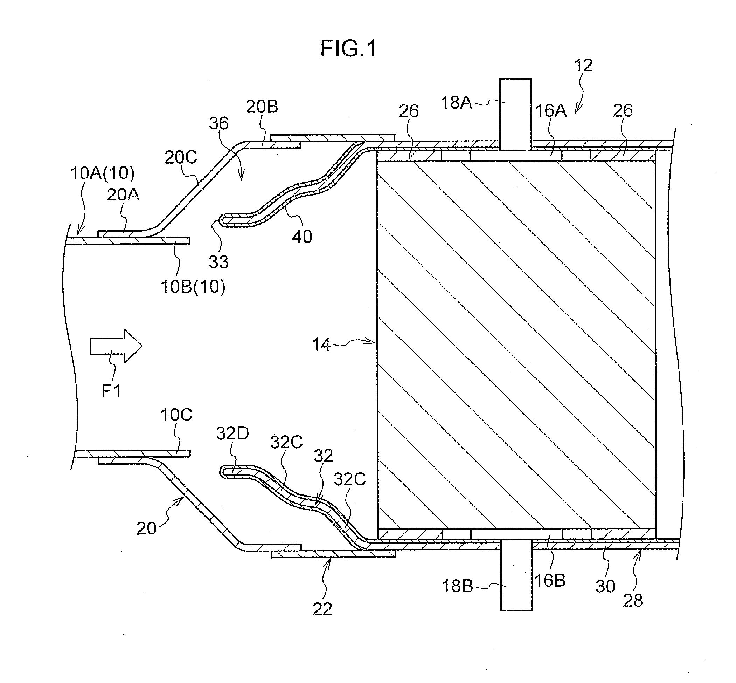

Fig. 1 shows a catalytic converter apparatus 12 according to a first exemplary embodiment of the present invention in a state in which the catalytic converter apparatus 12 is mounted to an exhaust pipe 10. Exhaust gas that is exhausted from an internal combustion engine (not shown in the drawings) flows in the exhaust pipe 10. Hereinafter, where the terms "upstream side" and "downstream side" are used alone, they mean an upstream side and a downstream side, respectively, of an exhaust gas flow direction (the direction of arrow F1) in the exhaust pipe 10. The catalytic converter apparatus 12 is disposed between an upstream side exhaust pipe 10A and a downstream side exhaust pipe (which is not shown in the drawings).

As shown in Fig. 1, the catalytic converter apparatus 12 includes a catalyst substrate 14 that is formed of a material that features electrical conductivity and stiffness. Materials that can be employed to structure the catalyst substrate 14 include conductive ceramics, conductive resins, metals and the like. In the present exemplary embodiment in particular, a conductive ceramic is employed.

The catalyst substrate 14 is formed of, for example, silicon carbide. A catalyst (platinum, palladium, rhodium or the like) is adhered to surfaces of the catalyst substrate 14 and supported thereat.

The catalyst features an action that cleans substances (hydrocarbons and the like) from the exhaust gas flowing in the exhaust pipe 10.

Two electrodes 16A and 16B are adhered to the catalyst substrate 14, and two terminals 18A and 18B are connected to the electrodes 16A and 16B, respectively. The catalyst substrate 14 is heated by electricity from the terminals 18A and 18B being passed through the electrodes 16A and 16B to the catalyst substrate 14. The catalyst supported at the surfaces of the catalyst substrate 14 is raised in temperature by this heating. Therefore, the catalyst exhibits the cleaning action more effectively. In other words, the catalytic converter apparatus 12 structures an electrically heated catalyst (EHC) in which the catalyst substrate 14 is heated by electrification.

The catalyst substrate 14 is retained in a state of being accommodated inside a tubular case 28, with a retention mat 26 that is disposed at an outer periphery of the catalyst substrate 14 therebetween. The retention mat 26 is formed in a cloth shape with insulativity and a predetermined resilience. The retention mat 26 is formed of, for example, an alumina mat, a resin mat, ceramic wool, an INTERAM mat, mullite or the like. When the catalyst substrate 14 is electrified, flows of current to the case 28 are suppressed by the retention mat 26.

The case 28 is provided with an accommodation tube 30 in a circular tube shape and an upstream side decreasing diameter portion 32. The accommodation tube 30 has a constant diameter from the upstream side to the downstream side thereof. The upstream side decreasing diameter portion 32 continues toward the upstream side from the upstream end of the accommodation tube 30 and serves as an inner pipe whose diameter is decreased in steps. That is, the upstream side decreasing diameter portion 32 is structured so as to form a shape that tapers toward the upstream side. In the example shown in Fig. 1, the upstream side decreasing diameter portion 32 decreases in diameter in two steps at two diameter reduction portions 32C. However, the number of the diameter reduction portions 32C may be one or may be three or more. In the present exemplary embodiment, the accommodation tube 30 and the upstream side decreasing diameter portion 32 are structured by a single member and formed as, for example, a metal pipe cast from a metal such as stainless steel or the like. The catalyst substrate 14 is retained at the interior of the accommodation tube 30.

The case 28 is provided with an upstream side conical member 20 and a connecting member 22 between the accommodation tube 30 and the upstream side exhaust pipe 10A. The upstream side conical member 20 and the connecting member 22 are disposed in this order from the upstream side of the exhaust gas flow direction. The outer pipe of the present invention is structured by the upstream side conical member 20 and the connecting member 22. The upstream side conical member 20 includes a fixed tube 20A and a fixed tube 20B. The fixed tube 20A is fixed to the outer side of the upstream side exhaust pipe 10A by welding or the like over the whole circumference thereof. The fixed tube 20B is fixed to the inner side of the connecting member 22 by welding or the like over the whole circumference thereof. The fixed tube 20B has a larger diameter than the fixed tube 20A. A truncated cone portion 20C connects between the fixed tube 20A and the fixed tube 20B. The diameter of the truncated cone portion 20C progressively increases from the fixed tube 20A toward the fixed tube 20B. At the inner side of the fixed tube 20A, the upstream side exhaust pipe 10A projects to the downstream side at the inner side of the truncated cone portion 20C, structuring a projection portion 10B.

The upstream side decreasing diameter portion 32 is disposed at the upstream side relative to the catalyst substrate 14 and at the downstream side relative to the truncated cone portion 20C. The upstream side decreasing diameter portion 32 is disposed inside the upstream side conical member 20 and connecting member 22 that serve as the outer pipe. Thus, two truncated cone-shaped members (the truncated cone portion 20C and the upstream side decreasing diameter portion 32) that increase in diameter from the upstream side toward the downstream side are provided successively in the exhaust gas flow direction.

An upstream end portion 32D, which is an axial direction end portion of the upstream side decreasing diameter portion 32, is disposed at the downstream side relative to a downstream end portion 10C of the upstream side exhaust pipe 10A (the projection portion 10B). Thus, the upstream side exhaust pipe 10A and the upstream side decreasing diameter portion 32 do not overlap (coincide) in the exhaust gas flow direction (the direction of arrow F1). A reservoir region 36 is structured between the upstream side conical member 20 and connecting member 22 and the upstream side decreasing diameter portion 32. As described below, the reservoir region 36 is a region in which condensed water (liquid water) that is condensed from moisture in the exhaust gas accumulates.

An inner diameter of the upstream end portion 32D of the upstream side decreasing diameter portion 32 is larger than an inner diameter of the downstream end portion 10C of the upstream side exhaust pipe 10A.

A glass coating layer 40 that serves as an insulating layer is applied to a range reaching from an inner periphery face of the accommodation tube 30 of the case 28 over an inner periphery face (an inner side face) of the upstream side decreasing diameter portion 32 to the outer periphery face of the upstream side decreasing diameter portion 32 (substantially the whole surface of the upstream side decreasing diameter portion 32). In the present exemplary embodiment, the glass coating layer 40 contains an inorganic substance such as a glass material or the like. The glass coating layer 40 is formed of a material that has a lower thermal conductivity than the case 28 and is formed with a predetermined porosity. The glass coating layer 40 is electrically insulative. Although the glass coating layer 40 is provided in the present exemplary embodiment, an insulating layer formed of an alternative material such as a ceramic or the like may be provided instead.

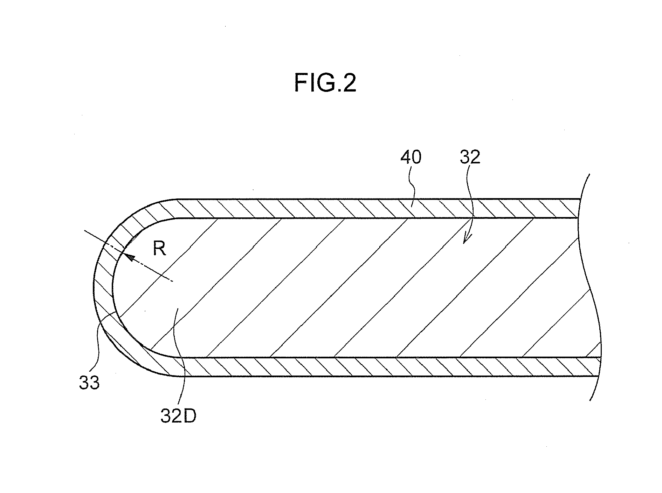

As shown in Fig. 2, a distal end face 33 of the upstream end portion 32D of the upstream side decreasing diameter portion 32 is formed in a curved surface shape (a rounded surface shape). That is, in a simply cut state, the upstream end portion 32D of the upstream side decreasing diameter portion 32 has corners with substantially right-angled shapes, but the sharp corners are removed by chamfering machining of the corners to the curved surface shape (the rounded surface shape). A plate thickness t of the upstream side decreasing diameter portion 32 is set at, for example, 1.4 to 1.9 mm. If the radius of curvature of the distal end face 33 of the upstream end portion 32D is represented by R, it is preferable to apply the chamfering machining such that R≥0.5 mm, and it is more preferable to apply the chamfering machining such that R≥0.7 mm. In the present exemplary embodiment, the radius of curvature R of the distal end face 33 of the upstream end portion 32D (indicated by R in Fig. 2) is set to approximately 0.75 mm (R0.75).

In the present exemplary embodiment, after the material of the glass coating layer has been coated onto the range reaching from the inner periphery face of the accommodation tube 30 over the inner periphery face of the upstream side decreasing diameter portion 32 to the outer periphery face of the upstream side decreasing diameter portion 32, the glass coating layer 40 is formed by firing of the materials. At this time, because sharp corners have been removed at the distal end face 33 of the upstream end portion 32D of the upstream side decreasing diameter portion 32, the formation of cracks in the glass coating layer 40 starting from sharp corners, due to contraction of the glass coating layer 40 during the firing, is suppressed.

The thickness of the glass coating layer 40 is preferably set to at least 100 µm and at most 200 µm, and is more preferably set to to at least 120 µm and at most 180 µm. When the thickness of the glass coating layer 40 is set in a suitable range, the formation of cracks in the glass coating layer 40 at the distal end face 33 of the upstream end portion 32D of the upstream side decreasing diameter portion 32 may be more effectively suppressed. For example, if the thickness of the glass coating layer is thinner than 100 µm, cracks in the glass coating layer at the distal end face of the upstream end portion may be caused by the contraction of the glass coating layer during firing. In addition, it may not be possible to assure satisfactory electrical insulation. If the thickness of the glass coating layer is more than 200 µm, it is difficult to form the glass coating layer with a more uniform thickness.

In the catalytic converter apparatus 12, moisture is included in the exhaust gas. The moisture may condense and form water droplets inside the exhaust pipe 10 at the upstream side relative to the catalytic converter apparatus 12. In the catalytic converter apparatus 12 according to the present exemplary embodiment, the upstream side exhaust pipe 10A and the upstream side decreasing diameter portion 32 do not overlap in the exhaust gas flow direction. Therefore, water condensing from the exhaust gas passes between the upstream side exhaust pipe 10A and the upstream side decreasing diameter portion 32 and accumulates in the reservoir region 36 that is between the upstream side conical member 20 and connecting member 22 and the upstream side decreasing diameter portion 32. Thus, adherence of condensed water to the catalyst substrate 14 is suppressed. Therefore, short circuits between the electrodes 16A and 16B caused by condensed water are suppressed. Therefore, electric current amounts in the catalyst substrate 14 are assured and the catalyst substrate 14 is effectively raised in temperature.

In particular, in the present exemplary embodiment, the upstream side decreasing diameter portion 32 projects integrally from the accommodation tube 30 and there is no joint between the upstream side decreasing diameter portion 32 and the accommodation tube 30. Therefore, water that has accumulated in the reservoir region 36 does not ingress through a joint between the upstream side decreasing diameter portion 32 and the accommodation tube 30 to the side thereof at which the catalyst substrate 14 is disposed.

Further, in the catalytic converter apparatus 12 according to the present exemplary embodiment, the inner diameter of the upstream end portion 32D of the upstream side decreasing diameter portion 32 is larger than the inner diameter of the downstream end portion 10C of the upstream side exhaust pipe 10A. Thus, although carbon is included in the exhaust gas, when, for example, the engine is starting at low temperature or the like, flows into the reservoir region 36 of the carbon in the exhaust gas that flows through the upstream side exhaust pipe 10A are suppressed. As a result, adherences of carbon to the outer periphery face of the upstream side decreasing diameter portion 32 are suppressed and short circuits between the electrodes 16A and 16B caused by carbon are suppressed. Therefore, electric current amounts in the catalyst substrate 14 are assured and the catalyst substrate 14 is effectively raised in temperature.

In the catalytic converter apparatus 12 according to the present exemplary embodiment, the diameter of the upstream side decreasing diameter portion 32 decreases toward the upstream side. Therefore, eddies form in the exhaust gas flowing at the inner side of the upstream side decreasing diameter portion 32, and the upstream side decreasing diameter portion 32 more easily absorbs heat from the exhaust gas. Thus, the temperature of the upstream side decreasing diameter portion 32 may be raised more easily, and combustion of carbon adhering to the upstream side decreasing diameter portion 32 may be promoted.

Now, operation of the catalytic converter apparatus 12 according to the present exemplary embodiment is described.

As shown in Fig. 1, in the catalytic converter apparatus 12, the case 28 is attached partway along the exhaust pipe 10 (between the upstream side exhaust pipe 10A and the downstream side exhaust pipe that is not shown in the drawings) so as to be coaxial with the exhaust pipe 10. When exhaust gas passes through the interior of the catalyst substrate 14, substances in the exhaust gas (hydrocarbons) and the like are cleaned by the catalyst supported at the catalyst substrate 14.

In the catalytic converter apparatus 12, the catalyst substrate 14 is electrified by the terminals 18A and 18B and the electrodes 16A and 16B, and the catalyst substrate 14 is heated. Thus, the catalyst supported by the catalyst substrate 14 is raised in temperature and may exhibit the cleaning action more effectively. For example, if the temperature of the exhaust gas is low, just after starting of the engine or the like, because the catalyst substrate 14 is already electrified and heated, the cleaning performance of the catalyst may be assured in an initial period when the engine starts.

The glass coating layer 40 is applied in the range reaching from the inner periphery face of the accommodation tube 30 of the case 28 over the inner periphery face of the upstream side decreasing diameter portion 32 to the outer periphery face of the upstream side decreasing diameter portion 32 (substantially the whole surface of the upstream side decreasing diameter portion 32). Thus, insulation of the case 28 (the accommodation tube 30 and the upstream side decreasing diameter portion 32) is improved. Therefore, current leakages to the case 28 (the accommodation tube 30 and the upstream side decreasing diameter portion 32) when the catalyst substrate 14 is electrified are suppressed. As a result, electric current amounts in the catalyst substrate 14 may be assured and the catalyst substrate 14 may be raised in temperature effectively.

As shown in Fig. 2, the distal end face 33 of the upstream end portion 32D of the upstream side decreasing diameter portion 32 is formed in the curved surface shape (the rounded surface shape). If the radius of curvature of the distal end face 33 of the upstream end portion 32D is represented by R, it is preferable to apply chamfering machining such that R≥0.5 mm. In the present exemplary embodiment, the radius of curvature R of the distal end face 33 of the upstream end portion 32D is set to approximately 0.75 mm (R0.75).

In the present exemplary embodiment, after the material of the glass coating layer has been coated onto the range reaching from the inner periphery face of the accommodation tube 30 over the inner periphery face of the upstream side decreasing diameter portion 32 to the outer periphery face of the upstream side decreasing diameter portion 32, the glass coating layer 40 is formed by firing of the materials. At this time, because the distal end face 33 of the upstream end portion 32D of the upstream side decreasing diameter portion 32 has been formed to the curved surface shape (machined to curved chamfers) and sharp corners of the distal end face 33 have been removed, cracking of the glass coating layer 40 starting from sharp corners, due to contraction of the glass coating layer 40 during the firing, is suppressed. Therefore, the formation of cracks in the glass coating layer 40 at the distal end face 33 of the upstream end portion 32D of the upstream side decreasing diameter portion 32 may be suppressed as a result.

To describe this in more detail, the upstream end portion of the upstream side decreasing diameter portion, in a simply cut state, has sharp corners at the distal end face thereof. Thus, because the glass coating layer contracts during firing, cracks may form in the glass coating layer starting from these corners. When cracks form in the glass coating layer, regions that may not insulate are produced and, because of short circuits, it may not be possible to assure electric current amounts in the catalyst substrate. In contrast, in the present exemplary embodiment, because the distal end face 33 of the upstream end portion 32D of the upstream side decreasing diameter portion 32 is formed in the curved surface shape (machined to curved chamfers), even when the glass coating layer 40 at the distal end face 33 of the upstream end portion 32D contracts during firing, the formation of cracks in the glass coating layer 40 may be suppressed.

The thickness of the glass coating layer 40 is set to at least 100 µm and at most 200 µm. Thus, because the glass coating layer 40 has a suitable thickness, the formation of cracks in the glass coating layer 40 at the distal end face 33 of the upstream end portion 32D of the upstream side decreasing diameter portion 32 may be suppressed. That is, because the distal end face 33 of the upstream end portion 32D of the upstream side decreasing diameter portion 32 is formed in the curved surface shape (the rounded surface shape), the thickness of the glass coating layer 40 may be formed to a substantially uniform thickness. For example, if there is a sharp corner at the upstream end portion of an upstream side decreasing diameter portion, the thickness of a glass coating layer may be thinner in the vicinity of the corner. If, for example, the thickness of a glass coating layer is thinner than 100 µm, cracks may form in the glass coating layer in the vicinity of the distal end face of an upstream end portion, due to contraction of the glass coating layer during firing, in addition to which it may not be possible to assure satisfactory electrical insulation. Further, if the thickness of a glass coating layer is thicker than 200 µm, it is difficult to form the glass coating layer with a more uniform thickness. In contrast, in the present exemplary embodiment, because the thickness of the glass coating layer 40 is set to least 100 µm and at most 200 µm, the thickness of the glass coating layer 40 may be made substantially uniform at the distal end face 33 of the upstream end portion 32D of the upstream side decreasing diameter portion 32. Thus, the formation of cracks in the glass coating layer 40 may be more effectively suppressed.

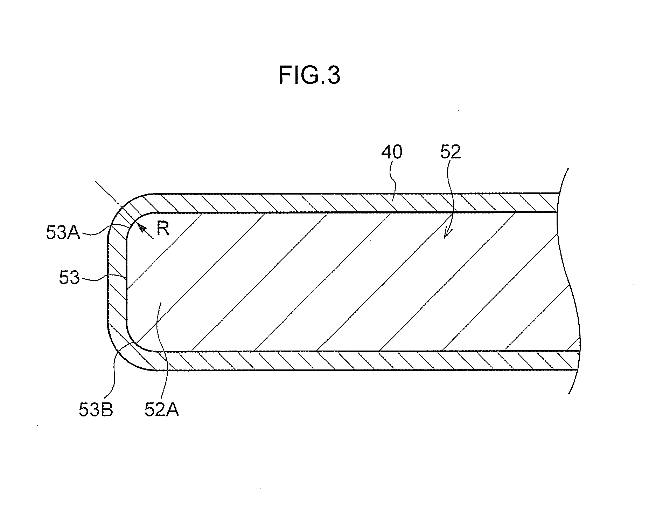

Fig. 3 shows a magnified sectional diagram of an upstream end portion of an upstream side decreasing diameter portion of a case employed in a catalytic converter apparatus according to a second exemplary embodiment of the present invention. Structural portions that are the same as in the first exemplary embodiment described above are assigned the same reference numerals, and descriptions thereof are not given.

As shown in Fig. 3, an upstream side decreasing diameter portion 52 serves as an inner pipe of the case. The upstream side decreasing diameter portion 52 is provided with curved chamfer portions 53A and 53B at which two locations, at corner portions of a distal end face 53 of an upstream end portion 52A of the upstream side decreasing diameter portion 52, are formed into curved surface shapes in a side sectional view (machined to curved chamfers, which may also be referred to as "curve machining"). That is, in the side sectional view, in a cut state, the upstream end portion 52A of the upstream side decreasing diameter portion 52 includes corners with substantially right-angled shapes at two locations, upper and lower, in Fig. 3. However, because the corners are machined to curved surface shapes to form the curved chamfer portions 53A and 53B, the sharp corners are removed. A plate thickness t of the upstream side decreasing diameter portion 52 is set to, for example, 1.4 to 1.9 mm. In the present exemplary embodiment, a radius of curvature R (R in Fig. 3) of the curved chamfer portions 53A and 53B, at the two upper and lower locations in Fig. 3 of the distal end face 53 of the upstream end portion 52A, is set to approximately 0.5 mm (2-R0.5). Other structures of this catalytic converter apparatus are the same as in the first exemplary embodiment.

In the present exemplary embodiment, after the material of the glass coating layer has been coated onto a range reaching over an inner periphery face and an outer periphery face of the upstream side decreasing diameter portion 52, the glass coating layer 40 is formed by firing of the materials. At this time, because the two locations of the distal end face 53 of the upstream end portion 52A of the upstream side decreasing diameter portion 52 are formed as the curved chamfer portions 53A and 53B that have been machined to curved surface shapes in the side sectional view and sharp corners of the distal end face 53 have been removed, cracking of the glass coating layer 40 starting from sharp corners, due to contraction of the glass coating layer 40 during the firing, is suppressed. Therefore, the formation of cracks in the glass coating layer 40 at the distal end face 53 of the upstream end portion 52A of the upstream side decreasing diameter portion 52 may be suppressed.

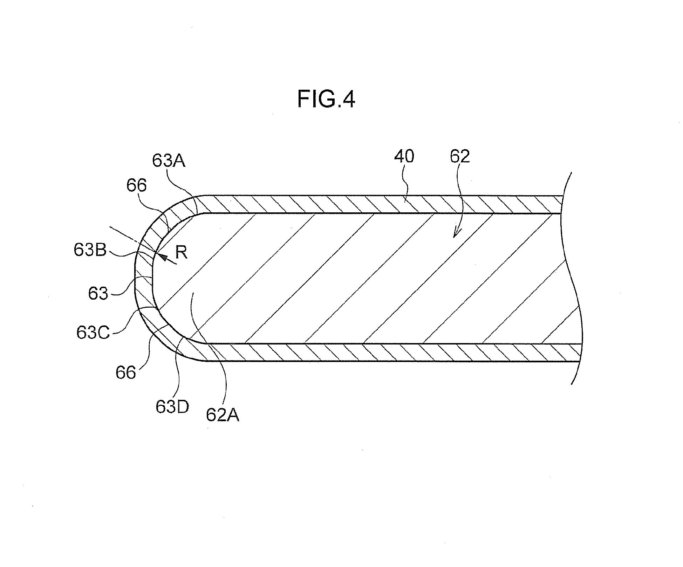

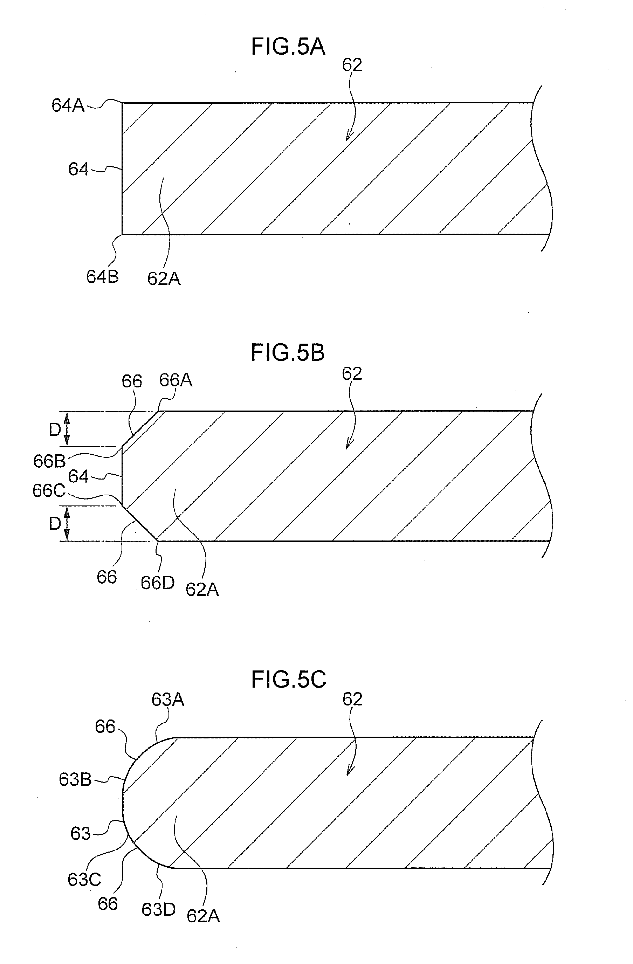

Fig. 4 shows a magnified sectional diagram of an upstream end portion of an upstream side decreasing diameter portion of a case employed in a catalytic converter apparatus according to a third exemplary embodiment of the present invention. Fig. 5A to Fig. 5C illustrate a fabrication process of the upstream end portion of the upstream side decreasing diameter portion shown in Fig. 4. Structural portions that are the same as in the first exemplary embodiment described above are assigned the same reference numerals, and descriptions thereof are not given.

As shown in Fig. 4, an upstream side decreasing diameter portion 62 serves as an inner pipe of the case. Corners of a distal end face 63 of an upstream end portion 62A of the upstream side decreasing diameter portion 62 are chamfer-machined to diagonal directions (straight chamfer machining). Then, the corners formed by straight chamfer machining are formed into curved surface shapes (curved chamfer machining). More specifically, as illustrated in Fig. 5A, in a side sectional view, the upstream end portion 62A of the upstream side decreasing diameter portion 62 has corners 64A and 64B in substantially right-angled shapes at a distal end face 64 in the simply cut state. As illustrated in Fig. 5B, the corners 64A and 64B at the two locations of the distal end face 64 are chamfer-machined (straight chamfer machining) to substantially flat surface shapes in diagonal directions in the side sectional view, to form straight chamfer portions 66 at the two locations. Here, a length D of each straight chamfer portion 66 in a direction orthogonal to the axial direction of the upstream side decreasing diameter portion 62 is set to 0.5 mm (2-C0.5). At this time, because of the straight chamfer portions 66, the distal end face 64 of the upstream end portion 62A has corners 66A, 66B, 66C and 66D at four locations in the side sectional view.

Then, as illustrated in Fig. 5C, the corners 66A, 66B, 66C and 66D at the four locations of the straight chamfer portions 66 are machined to curved surface shapes (curved chamfer machining, which may also be referred to as "curve machining"). Thus, curved chamfer portions 63A, 63B, 63C and 63D are formed. Thus, the distal end face 63 is formed with a smooth curved surface shape at the upstream end portion 62A (see Fig. 4). In the present exemplary embodiment, the curved chamfer portions 63A, 63B, 63C and 63D are chamfer-machined such that a radius of curvature R of each is approximately 0.5 mm (4-R0.5). Other structures of this catalytic converter apparatus are the same as in the first exemplary embodiment.

In the present exemplary embodiment, after the material of the glass coating layer has been coated onto a range reaching over an inner periphery face and an outer periphery face of the upstream side decreasing diameter portion 62, the glass coating layer 40 is formed by firing of the materials. At this time, the distal end face 63 of the upstream end portion 62A of the upstream side decreasing diameter portion 62 has been formed into a smooth curved surface shape by the straight chamfer machining followed by the curved chamfer machining. Thus, sharp corners of the distal end face 63 of the upstream end portion 62A of the upstream side decreasing diameter portion 62 are removed. Therefore, cracking of the glass coating layer 40 starting from sharp corners, due to contraction of the glass coating layer 40 during the firing, is suppressed. As a result, the formation of cracks in the glass coating layer 40 at the distal end face 63 of the upstream end portion 62A of the upstream side decreasing diameter portion 62 may be suppressed.

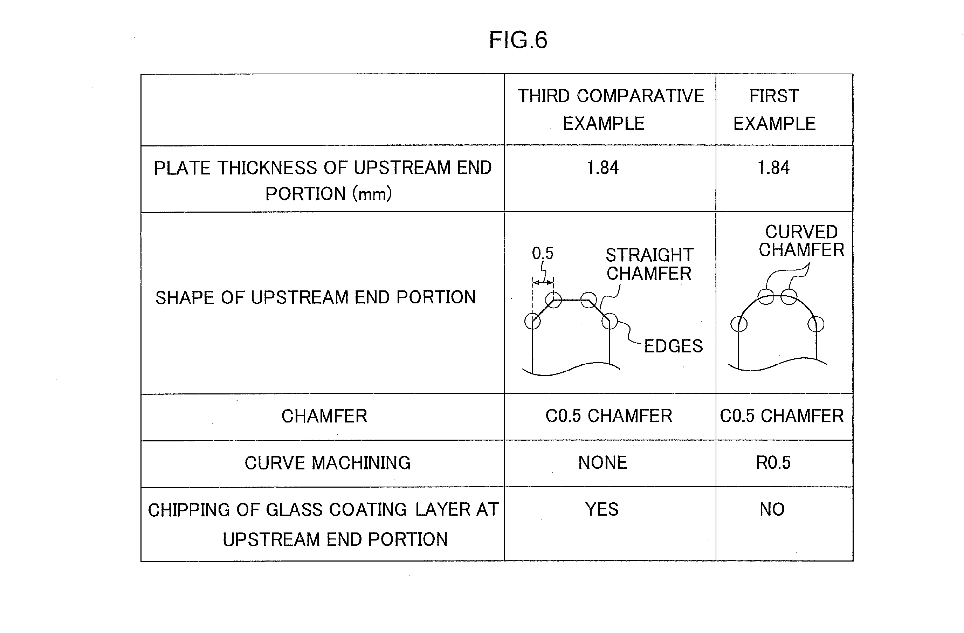

Fig. 6 shows results of inspections for the presence or absence of chipping (cracking) of a glass coating layer in accordance with the shapes of upstream end portions of upstream side decreasing diameter portions.

As shown in Fig. 6, a third comparative example illustrates an example in which straight chamfer machining (C0.5 chamfering) is applied to two locations at the upstream end portion of an upstream side decreasing diameter portion but curve machining is not applied. In the first example, straight chamfer machining (C0.5 chamfering) is applied to two locations at the upstream end portion of an upstream side decreasing diameter portion and curve machining (R0.5) is applied to corners at four locations. As can be seen from Fig. 6, in the third comparative example, chipping occurs in the glass coating layer formed at the upstream end portion of the upstream side decreasing diameter portion. In contrast, in the first example it can be seen that chipping does not occur in the glass coating layer formed at the upstream end portion of the upstream side decreasing diameter portion.

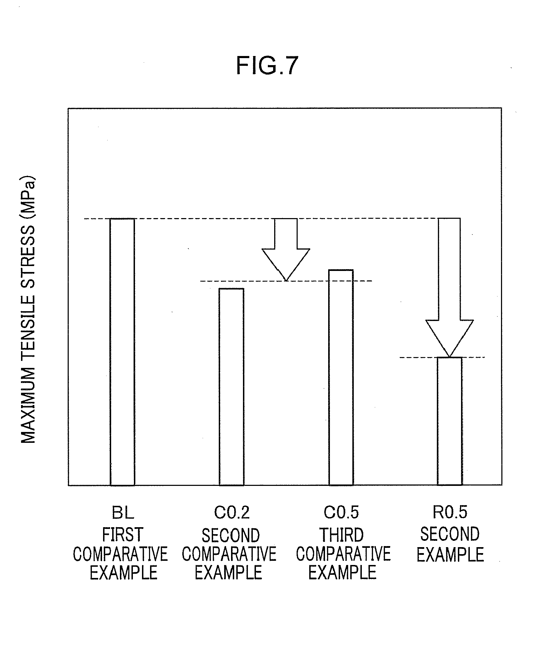

Fig. 7 shows a graph of relationships between the shapes of upstream end portions of upstream side decreasing diameter portions and maximum tensile stresses.

In Fig. 7, a first comparative example (BL) is a situation in which a distal end face of an upstream end portion of an upstream side decreasing diameter portion has sharp corners in a block shape that is simply cut off. A second comparative example (C0.2) is a situation in which, in side sectional view, straight chamfer machining (C0.2 chamfering) is applied to two locations at the corners of the distal end face of the upstream end portion of an upstream side decreasing diameter portion. A third comparative example (C0.5) is a situation in which, in side sectional view, straight chamfer machining (C0.5 chamfering) is applied to two locations at the corners of the distal end face of the upstream end portion of an upstream side decreasing diameter portion. A second example (R0.5) is a situation in which, in side sectional view, curve machining (curved chamfer machining) is applied to two locations at the corners of the distal end face of the upstream end portion of an upstream side decreasing diameter portion such that the radius of curvature R is 0.5 mm. The maximum tensile stresses (MPa) in Fig. 7 are results predicted by computer numerical analyses of thermal stresses produced during cooling of the upstream end portions of the upstream side decreasing diameter portions.

As can be seen from Fig. 7, in the second comparative example (C0.2) and the third comparative example (C0.5), because the straight chamfer machining is applied to the two locations at the corners of the distal end face of the upstream end portion of the upstream side decreasing diameter portion, the maximum tensile stress may be reduced by around 25% compared to the situation of the first comparative example (BL) that has sharp corners at the distal end face of the upstream end portion of the upstream side decreasing diameter portion. In the second example (R0.5), because the curve machining is applied to the two locations of the corners of the distal end face of the upstream end portion of the upstream side decreasing diameter portion such that the radius of curvature is 0.5 mm, the maximum tensile stress may be reduced by 50% or more compared to the situation of the first comparative example (BL) that has sharp corners at the distal end face of the upstream end portion of the upstream side decreasing diameter portion. Thus, in a catalytic converter apparatus, the maximum tensile stress may be reduced by around 50% or more by making the radius of curvature R of the distal end face of the upstream end portion of the upstream side decreasing diameter portion at least 0.5 mm. Hence, because the thermal stresses produced during cooling of the upstream end portion of the upstream side decreasing diameter portion may be reduced, the formation of cracks in the glass coating layer formed at the distal end face of the upstream end portion of the upstream side decreasing diameter portion may be suppressed.

Note that the shape of the distal end face of the upstream end portion of an upstream side decreasing diameter portion is not limited by the first to third exemplary embodiments but may be modified to an alternative shape provided it is formed as a curved surface shape.

In the first to third exemplary embodiments, examples are illustrated in which the insulating layer is provided at the distal end face of the upstream end portion of an upstream side decreasing diameter portion that structures an inner pipe of a case, but the present invention is not limited by the first to third exemplary embodiments. For example, the present invention may also be applied to a case in which an insulating layer is provided at a distal end face of an axial direction end portion (a downstream end portion) of a downstream side decreasing diameter portion that is disposed at the downstream side of a catalyst substrate inside a case and structures an inner pipe of the case. The present invention may further be applied to a case in which insulating layers are provided at distal end faces of both an upstream side decreasing diameter portion and a downstream side decreasing diameter portion.

## Claims

1. A catalytic converter apparatus (12) comprising:
a catalyst substrate (14) that supports a catalyst for cleaning exhaust gas exhausted from an internal combustion engine, the catalyst substrate being heated by electrification;
a case (28) formed in a tubular shape, the catalyst substrate being accommodated inside the case and the case being attached to an exhaust pipe (10);
an outer pipe (20, 22) provided at the case, the outer pipe being disposed at least at an upstream side of an exhaust gas flow direction relative to the catalyst substrate (14);
an inner pipe (32) provided at the case inside the outer pipe, an axial direction end portion of the inner pipe being formed in a tapered shape and a distal end face of the axial direction end portion being formed in a curved surface shape; and
an insulating layer (40) provided at least at an inner side face and the axial direction end portion of the inner pipe (32).

2. The catalytic converter apparatus according to claim 1, wherein, if a radius of curvature of the distal end face of the axial direction end portion is represented by R, chamfer machining is applied such that R≥0.5mm.

3. The catalytic converter apparatus according to claim 1 or claim 2, wherein a thickness of the insulating layer (40) is set to at least 100 µm and at most 200 µm.

4. The catalytic converter apparatus according to any one of claims 1 to 3, wherein the axial direction end portion is an upstream end portion that is arranged toward the upstream side of the exhaust gas flow direction.
